# EUROPEAN PATENT APPLICATION

(11) **EP 3 351 789 A1**
(43) Date of publication of application: **25.07.2018**
(21) Application number: 18152222.8
(22) Date of filing: 18.01.2018
(51) Int. Cl.: F03D 7/02, F03D 7/04

(54) **WIND POWER GENERATION SYSTEM OR METHOD OF OPERATING WIND POWER GENERATION SYSTEM**

(30) Priority: 24.01.2017 JP 2017009921
(71) Applicant: Hitachi, Ltd., Chiyoda-ku, Tokyo 100-8280 (JP)
(72) Inventor: KAKUYA, Hiromu, Tokyo, 100-8280 (JP); YAMAMOTO, Yukio, Tokyo, 100-8280 (JP); HINO, Noriaki, Tokyo, 100-8280 (JP)
(74) Representative: MERH-IP Matias Erny Reichl Hoffmann Patentanwälte PartG mbB

(57) **Abstract**

A wind power generation system 1 includes: a blade 2; a rotor 4, wherein rotational energy of the rotor 4 is used to generate power; and a control device which controls a rotor rotation speed, wherein the control device keeps the rotor rotation speed to be a rated value in a case where the rotor rotation speed is equal to or more than a first wind speed, and wherein, in a case where the rotor rotation speed is less than the first wind speed and equal to or more than a second wind speed, a first operation mode in which a rotor rotation speed target value is increased to a value larger than the rated rotor rotation speed, and a second operation mode in which the rotor rotation speed target value is reduced from the value larger than the rated rotor rotation speed to the rated rotor rotation speed are executable.

## Description

### BACKGROUND OF THE INVENTION

### 1. Field of the Invention

The present invention relates to a wind power generation system or a method of operating the wind power generation system and, in particular, to preferably improve a power generation efficiency.

### 2. Description of the Related Art

In recent years, there is a concern about global warming due to an increase of emission of carbon dioxide and about energy shortage caused by running out of fossil fuels, and there is required a reduction in emission of carbon dioxide and an improvement of an energy self-sufficiency. In order to realize these requirements, it is effective to introduce a power generation system which is able to generate power using reusable energy obtained from nature such as wind and sun which do not emit carbon dioxide and without using the import-defendant fossil fuels.

Among the power generation systems using reusable energy, a wind power generation system receives attention as a power generation system which is not steeply changed in its output according to solar radiation unlike a photovoltaic power generation system and is able to generate power in a relatively stable manner.

In order to effectively use the wind energy, there is a desire to efficiently improve the wind power generation system still more. Improvement in hardware such as a blade and a generator is ongoing, and concurrently improvement in operation using a control algorithm mounted in a controller to collectively operate the wind power generation system is also ongoing.

As a unit which improves the operation using the control algorithm, JP 5491769 B2 discloses a technique "Device and method of increasing energy supplement in wind turbine". Claim 1 is as follows. "A variable speed control system which includes an initial rotation speed setting value which is a maximum rotation speed setting value when a blade of a wind turbine rotates about a hub, and at least one sensor which is disposed and arranged to acquire at least two operation parameters is included, the control system is selectively configured to compare the at least two acquired operation parameters with a mechanical load of the wind turbine, a rotation speed adjusting program is executed in a case where the at least two acquired operation parameters are equal to or less than the mechanical load of the wind turbine, the speed adjusting program determines an adjustment rotation speed setting value larger than the initial rotation speed setting value according to the at least two operation parameters which are acquired and compared, and the maximum rotation speed setting value of the wind turbine is increased by the adjustment rotation speed setting value".

### SUMMARY OF THE INVENTION

When the technique disclosed in JP 5491769 B2 is applied, a rated generation power of the wind power generation system is increased, and a larger generation power can be obtained. However, when JP 5491769 B2 is applied, respective elements such as electric machines including a generator and a power converter operate with the rated generation power or more, and a load larger than an initially designed value may be added. Therefore, there is a need to prepare a large margin in capacitance.

An object of the invention is to increase a power generation efficiency while taking loads on the respective elements of a wind power generation system into consideration.

To solve the above problem, a wind power generation system according to the invention is a wind power generation system, including: a blade which is able to change a pitch angle; a rotor which receives wind and rotates, wherein rotational energy of the rotor is used to generate power; and/or a control device which controls a rotor rotation speed which is a rotation speed of the rotor, wherein the control device keeps the rotor rotation speed to be a rated value in a case where the rotor rotation speed is equal to or more than a first wind speed which is a wind speed resulting in a rated generation power, wherein, in a case where the rotor rotation speed is less than the first wind speed and equal to or more than a second wind speed which is a wind speed resulting in a rated rotor rotation speed, a first operation mode in which a rotor rotation speed target value, that is, a target value of the rotor rotation speed, is increased to a value larger than the rated rotor rotation speed according to an increase of the wind speed, and a second operation mode in which the rotor rotation speed target value is reduced from the value larger than the rated rotor rotation speed to the rated rotor rotation speed according to the increase of the wind speed are executable, and wherein the first operation mode is executed in a wind speed range lower than the second operation mode.

Furthermore, to solve the above problem, a method of operating a wind power generation system according to the invention is a method of operating a wind power generation system, including: a blade which is able to change a pitch angle; and/or a rotor which receives wind and rotates, wherein rotational energy of the rotor is used to generate power, wherein the rotor rotation speed is kept to be a rated value in a case where the rotor rotation speed is equal to or more than a first wind speed which is a wind speed resulting in a rated generation power, wherein, in a case where the rotor rotation speed is less than the first wind speed and equal to or more than a second wind speed which is a wind speed resulting in a rated rotor rotation speed, a first operation mode in which a rotor rotation speed target value, that is, a target value of the rotor rotation speed, is increased to a value larger than the rated rotor rotation speed according to an increase of the wind speed, and a second operation mode in which the rotor rotation speed target value is reduced from a value larger than the rated rotor rotation speed to the rated rotor rotation speed according to an increase of the wind speed are executable, and wherein the first operation mode is executed in a wind speed range lower than the second operation mode.

According to the invention, it is possible to increase a power generation efficiency while taking loads on the respective elements of a wind power generation system into consideration.

Objects, configurations, and features other than those described above will become clear through the explanation about the following embodiments.

### BRIEF DESCRIPTION OF THE DRAWINGS

Fig. 1 is a diagram schematically illustrating a configuration of a wind power generation system 1 according to the embodiment of the invention;
Fig. 2 is a block diagram illustrating a process outline of an operation control unit which is mounted in a controller 10 of the wind power generation system 1 according to the embodiment of the invention;
Fig. 3 is a diagram schematically illustrating a relation between a generation power, a generator rotation speed, a generator torque, and a blade pitch angle with respect to a wind speed in a case where the operation control unit mounted in the controller 10 of the wind power generation system 1 according to the embodiment of the invention is applied;
Fig. 4 is a diagram schematically illustrating an exemplary method of adjusting the generator rotation speed with respect to the wind speed in a case where the operation control unit mounted in the controller 10 of the wind power generation system 1 according to the embodiment of the invention is applied;
Fig. 5 is a time chart schematically illustrating a change in the wind speed, the generator rotation speed, the generator torque, and the generation power showing an exemplary operation when the generation power is set to be equal to or less than a rated value in a case where the operation control unit mounted in the controller 10 of the wind power generation system 1 according to the embodiment of the invention is applied;
Fig. 6 is a diagram schematically illustrating a configuration of a device which allows the mounting of the operation control unit mounted in the controller 10 of the wind power generation system 1 according to the embodiment of the invention; and
Fig. 7 is a flowchart illustrating a process outline of the operation control unit mounted in the controller 10 of the wind power generation system 1 according to the embodiment of the invention.

### DESCRIPTION OF THE PREFERRED EMBODIMENTS

Hereinafter, embodiments of the invention will be described in detail using the drawings. Further, the following description is merely given as an example, and it is not intended to limit embodiments of the invention to the following examples.

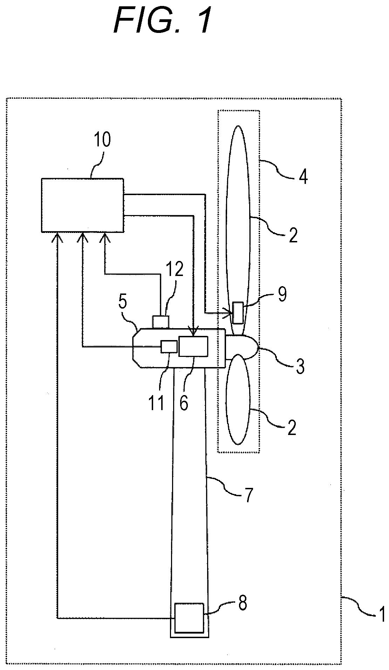

First, the entire configuration of a wind power generation system to which the invention is applicable will be schematically described using Fig. 1.

A wind power generation system 1 of Fig. 1 includes a rotor 4 which is configured by a plurality of blades 2 and a hub 3 connecting the plurality of blades 2. The rotor 4 is connected to a nacelle 5 through a rotation shaft (not illustrated in Fig. 1), and can change a position of the blade 2 while rotating. The nacelle 5 rotatably supports the rotor 4. The nacelle 5 is provided with a generator 6 at an appropriate position. The rotor 4 rotates when the blade 2 receives winds, and a turning force of the rotor 4 causes the generator 6 to rotate, so that the power can be generated.

Each blade 2 includes a pitch actuator 9 which can change a positional relation between the blade 2 and the hub 3 (that is, an angle of the blade called a pitch angle). Rotational energy of the rotor 4 with respect to the wind can be changed by changing the pitch angle of the blade 2 using the pitch actuator 9. Therefore, a generation power of the wind power generation system 1 can be controlled while controlling the rotation speed of the rotor 4 in a wide wind speed range.

In the wind power generation system 1 of Fig. 1, the nacelle 5 is provided on a tower 7, and supported rotatably to the tower 7. The load of the blade 2 is supported by the tower 7 through the hub 3 and the nacelle 5. The tower 7 is provided in a base portion (not illustrated in the drawing), and disposed at a predetermined position such as on the ground, on the sea, in a floating body.

The generator 6 provided in the nacelle 5 generates torque under the control of a power conditioning system 8 provided in the tower 7 (or the nacelle 5), and can controls the rotation torque of the rotor 4.

In addition, the wind power generation system 1 includes a controller 10. The controller 10 adjusts the generator 6 and the pitch actuator 9 on the basis of a generator rotation speed of a rotation speed sensor 11 which is, for example, fixed on the opposite side to the rotor 4 of the generator to measure the rotation speed of the rotor and the rotation shaft of the generator 6, and the generation power measured by the power conditioning system 8, and adjusts the power output by the wind power generation system 1. Further, a wind speed sensor 12 is provided on the nacelle 5 to measure a wind speed in the vicinity of the nacelle, and the measured wind speed is input to the controller 10.

In Fig. 1, the controller 10 is illustrated to be disposed in the outside of the nacelle 5 or the tower 7, but the invention is not limited thereto. The controller may be disposed at a predetermined position inside or outside the nacelle 5 or the tower 7, or may be at a position outside the wind power generation system 1. In addition, the power conditioning system 8 is illustrated to be provided in the tower 7, but the invention is not limited thereto. The power conditioning system may be disposed at a predetermined position of the nacelle 5.

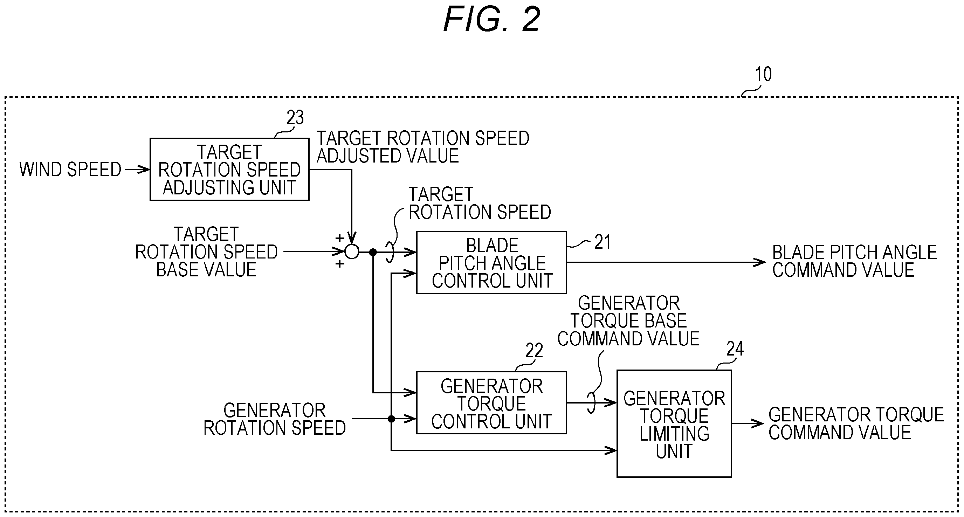

Next, a control unit mounted in the controller 10 will be described using Figs. 2 to 6.

Fig. 2 is a block diagram illustrating the outline of an operation control unit which is mounted in the controller 10. The operation control unit illustrated in Fig. 2 is configured by a blade pitch angle control unit 21, a generator torque control unit 22, a target rotation speed adjusting unit 23, and a generator torque limiting unit 24. The blade pitch angle control unit 21 determines a blade pitch angle command value on the basis of a target rotation speed and the generator rotation speed output by the rotation speed sensor 11. The generator torque control unit 22 determines a generator torque base command value on the basis of the target rotation speed and the generator rotation speed. The target rotation speed adjusting unit 23 determines a target rotation speed adjusted value on the basis of the wind speed which is the output of the wind speed sensor 12. Herein, the wind speed (the output of the wind speed sensor 12) is omitted from the drawing, but may be the same output signal of the wind speed sensor 12, or may be a value obtained by converting a wind speed at a predetermined distance away from the wind power generation system 1 using a predetermined arithmetic equation. In addition, the wind speed may be a value subjected to a filtering process in which a predetermined time constant is provided. The target rotation speed is a value obtained by adding the target rotation speed adjusted value and a target rotation speed base value. Further, while being omitted in the drawing, the target rotation speed base value is a value which is adjusted to an appropriated value according to an operation situation of the wind power generation system 1. The generator torque limiting unit 24 determines a generator torque command value on the basis of the generator rotation speed and the generator torque base command value. While not denoted in the drawing, the generator torque limiting unit 24 has a function of controlling the generation power output by the wind power generation system 1 not to be equal to or more than a rated generation power. Specifically, in a case where a value obtained by multiplying the generator rotation speed and the generator torque base command value is equal to or less than the rated generation power, the generator torque base command value is set to the generator torque command value. In a case where a value obtained by multiplying the generator rotation speed and the generator torque base command value is larger than the rated generation power, a value obtained by dividing the rated generation power by the generator rotation speed is set to the generator torque command value.

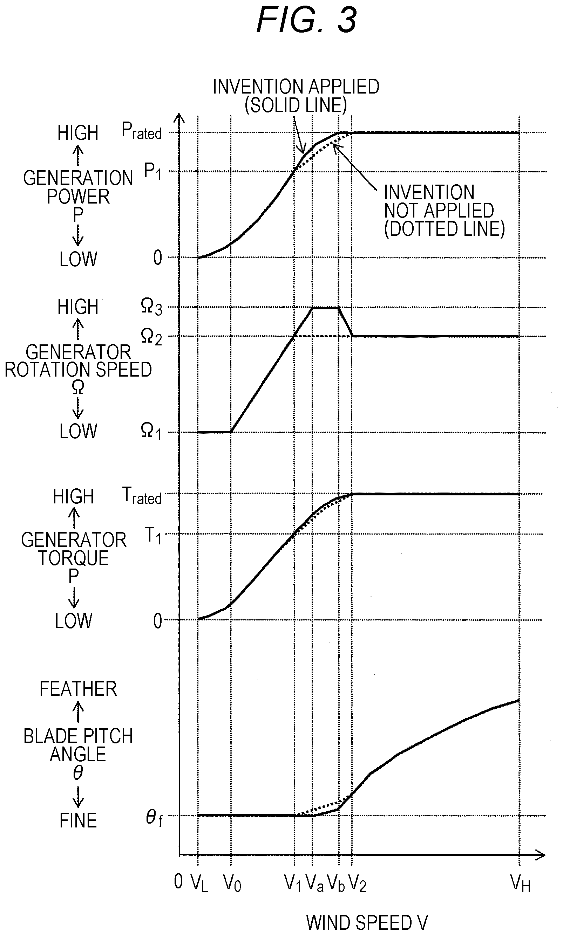

Fig. 3 illustrates a characteristic of the wind power generation system 1 which is obtained by the operation control unit mounted in the controller 10 illustrated in Fig. 2, and a characteristic of the wind power generation system 1 in a case where the operation control unit is not applied. The horizontal axis of Fig. 3 represents the wind speed, and the vertical axis represents the generation power, the generator rotation speed, the generator torque, and the blade pitch angle from the upper side of the drawing. The upper side in Fig. 3 shows that the generation power is large, the generator rotation speed is large, the generator torque is large, and the blade pitch angle is in a feather direction. The lower side indicates the opposite direction. In addition, the broken line in Fig. 3 indicates a characteristic in a case where the operation control unit according to this embodiment is not applied, and the solid line indicates a characteristic in a case where the operation control unit according to this embodiment is applied. Further, a difference of whether the operation control unit according to this embodiment is applied relates to a condition of the wind speed between V₁ to V₂, and there is no difference in the other wind speed conditions regardless of whether the operation control unit is applied.

First, the description will be given about a case where the operation control unit according to this embodiment is not applied. As illustrated in the second row from the top of Fig. 3, the generator rotation speed is kept at Ω₁ on a condition of the wind speed V_{L} to V₀, and the generator rotation speed is increased from Ω₁ to Ω₂ on a condition of the wind speed V₀ to V₁. Then, the generator rotation speed is kept at Ω₂ on a condition of the wind speed of V₁ or more. Herein, wind speed V₀ is a wind speed at which the generator rotation speed starts increasing from Ω₁ to Ω₂. In order to control the generator rotation speed in such a way, the pitch angle of the blade 2 is adjusted as illustrated in the lowest row of Fig. 3. Specifically, the generator rotation speed is kept fine on a condition of the wind speed V_{L} to V₁, and is gradually increased when the wind speed is equal to or more than V₁ (moving in the feather direction). The increase characteristic of the pitch angle is determined on the basis of the generator rotation speed and the characteristic of the generator torque as illustrated in the second row from the bottom of Fig. 3. The generator torque is increased as the wind speed is increased on a condition of the wind speed V_{L} to V₂, and is kept at T_{rated} (the rated value) on a condition of the wind speed of V₂ or more. As described above, when the generator rotation speed and the generator torque are adjusted, the generation power of the wind power generation system 1 is increased as the wind speed is increased on a condition of the wind speed V_{L} to V₂ as illustrated in the uppermost row of Fig. 3, and is kept at P_{rated} (the rated value) on a condition of the wind speed of V₂ or more.

Next, the description will be given about a case where the operation control unit according to this embodiment is applied. As illustrated in the second row from the top of Fig. 3, in the operation control unit according to this embodiment, the generator rotation speed is increased to be equal to or more than Ω₂ on a condition of the wind speed V₁ to V₂. On a condition of the wind speed V₁ to Vₐ, the rotation speed is increased up to Ω₃ as the wind speed is increased. On a condition of the wind speed Vₐ to V_{b}, the generator rotation speed is kept at Ω₃ regardless of the wind speed. In addition, on a condition of the wind speed V_{b} to V₂, the generator rotation speed is reduced from Ω₃ to Ω₂ as the wind speed is increased, and is kept at Ω₂ on a condition of the wind speed of V₂ or more. The above-described target rotation speed adjusting unit 23 determines the target rotation speed adjusted value such that the generator rotation speed changes at Ω₂ and Ω₃ according to the wind speed. With the configuration, the condition that the pitch angle of the blade 2 is kept fine is extended up to Vₐ as illustrated in the lowest row of Fig. 3, and is increased in the feather direction on a condition of the wind speed of Vₐ or more. In addition, as illustrated in the second row from the bottom of Fig. 3, the generator torque is also increased on a condition of the wind speed V₁ to V₂ compared to a case where the operation control unit according to this embodiment is not applied. Further, Fig. 3 illustrates the characteristic that the generator torque is increased on a condition of the wind speed V₁ to V₂ compared to a case where the operation control unit according to this embodiment is not applied, but the invention is not limited thereto. The generator torque may be equal to the case where the operation control unit according to this embodiment is not applied, or may be reduced compared to the case where this embodiment is not applied. The generation power can be increased by increasing the rotation speed if the reduction width of the generator torque falls within a certain range. The generation power illustrated in the lowest row of Fig. 3 shows a characteristic of increasing compared to the case where the operation control unit according to this embodiment is applied on a condition of the wind speed V₁ to V₂ according to the characteristics of the generator rotation speed and the generator torque.

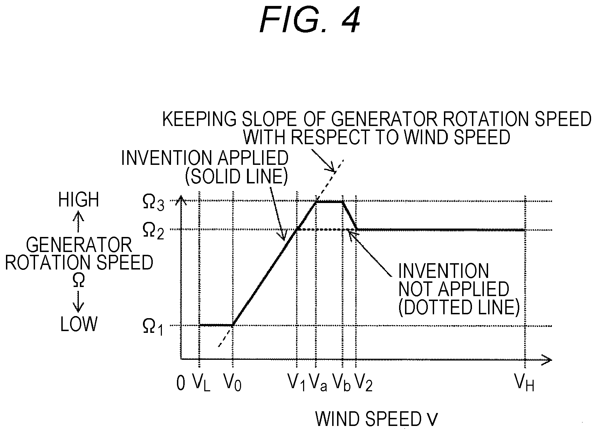

Fig. 4 illustrates a characteristic of the generator rotation speed of the wind power generation system 1 which is obtained by the operation control unit mounted in the controller 10 illustrated in Fig. 2, and a characteristic of the generator rotation speed of the wind power generation system 1 in a case where the operation control unit is not applied. Further, in Fig. 4, the generator rotation speed of Fig. 3 is omitted. The horizontal axis of Fig. 4 represents the wind speed, and the vertical axis represents the generator rotation speed in which the upper side of the drawing shows a high generator rotation speed. In addition, the broken line in Fig. 3 indicates a characteristic in a case where the operation control unit according to this embodiment is not applied, and the solid line indicates a characteristic in a case where the operation control unit according to this embodiment is applied. Further, a difference of whether the operation control unit is applied relates only to a condition of the wind speed V₁ to V₂, and there is no difference in the other wind speed conditions regardless of whether the operation control unit is applied.

As described in Fig. 3, the generator rotation speed is increased on a condition of the wind speed V₁ to V₂ in the operation control unit according to this embodiment, and the inclining of the increase of the generator rotation speed with respect to the wind speed on a condition of the wind speed V₁ to Vₐ is matched with the inclining of the increase of the generator rotation speed which is realized on a condition of the wind speed V₀ to Vₐ. However, the invention is not necessarily limited to the above configuration. The inclining may be not matched, or may be fluctuating. Even after reaching the rated rotation speed, the generator rotation speed may be increased still more, and thus the generation power can be made increased even in a low wind speed range. On the other hand, the rated generation power is kept constant. The keeping of the rated generation power is also linked to protection of an electric machine and stabilization of a system voltage.

In addition, in this embodiment, the control on a condition of the wind speed V₁ to Vₐ is called a first operation mode, and the control on a control between V_{b} to V₂ is called a second operation mode for the distinction. In the first operation mode, a rotor rotation speed target value is increased to a value larger than a rated rotor rotation speed according to the increase of the wind speed. In the second operation mode, the rotor rotation speed target value is reduced from a value larger than the rated rotor rotation speed to the rated rotor rotation speed according to the increase of the wind speed. Further, the first operation mode is performed in a wind speed lower than the second operation mode.

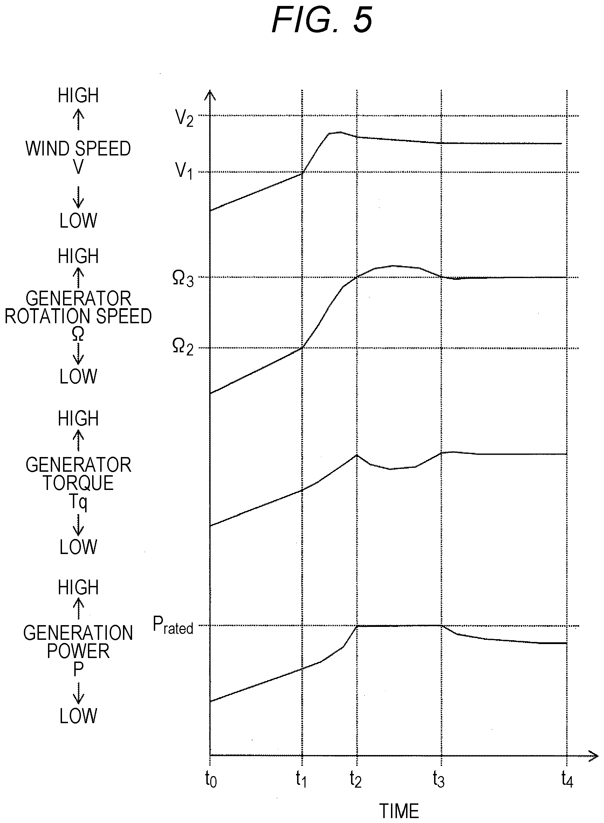

Fig. 5 is a time chart illustrating an operation outline of the generator torque limiting unit 24 illustrated in Fig. 2 in the operation control unit according to this embodiment. The horizontal axis of Fig. 5 represents time, and the vertical axis represents the wind speed, the generator rotation speed, the generator torque, and the generation power from the upper side of the drawing. The upper side of Fig. 5 shows a high wind speed, a high generator rotation speed, a high generator torque, and a high generation power. Further, Fig. 5 illustrates a case where, as illustrated in the uppermost row, the wind speed is increased from Time t₀, becomes equal to or more than V₁ at Time t₁, and then later is changed between V₁ and V₂, steeply increased from Time t₁, and gradually reduced until Time t₄.

As illustrated in the second row from the top of Fig. 5, the generator rotation speed is increased up to Ω₂ from Time t₀ to Time t₁, and the target rotation speed is adjusted by the target rotation speed adjusting unit 23 after Time t₁. Therefore, the generator rotation speed is increased up to Ω₃ according to the steep increase of the wind speed. As illustrated in the second row from the bottom of Fig. 5, the generator torque is also increased from Time t₀ to Time t₂ as the increase of the wind speed. However, in a case where the generator rotation speed from Time t₂ to Time t₃ is equal to or more that Ω₃, the generator torque is reduced and the generator torque command value is adjusted to be limited to reduce the generator torque in order not to make the generation power increase more than the rated value. The generation power is adjusted not to increase more than the rated value as illustrated in the lowest row of Fig. 5 by limiting the generator torque command value.

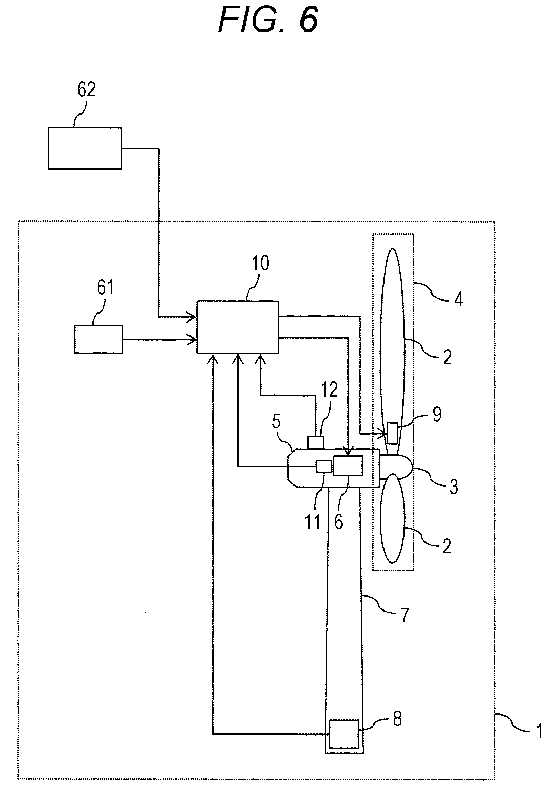

Fig. 6 is a diagram schematically illustrating another configuration of the wind power generation system 1 according to this embodiment. The schematic configuration of the wind power generation system is similar to that illustrated in Fig. 1, and a first command device 61 and a second command device 62 are added to give a command to the controller 10. The first command device 61 is provided at an appropriate position of the wind power generation system 1 while the second command device 62 is provided at the outside of the wind power generation system 1 or at a remote place. When a command of the first command device 61 or the second command device 62 (for example, a button operation of a worker) is issued, the execution allowance or a prohibition command of the operation control unit according to the above-described embodiment is output to the controller 10, and the controller 10 determines whether the operation control unit according to this embodiment is allowed to operate or not.

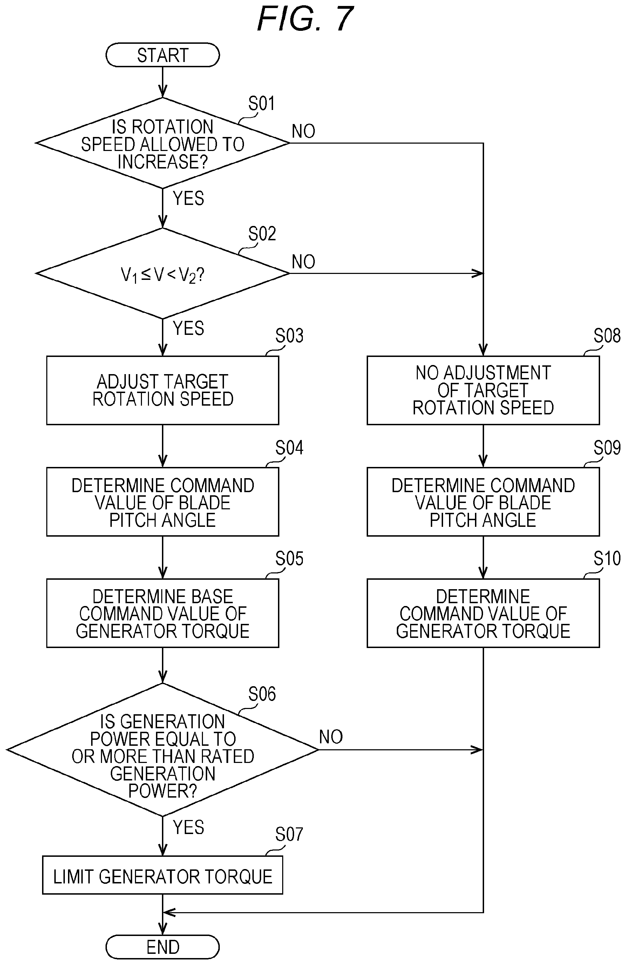

Fig. 7 is a flowchart illustrating a process outline of the operation control unit according to this embodiment.

In Step S01, the operation control unit according to this embodiment determines whether an increase of the rotation speed is allowed on the basis of a command of the command device 61 or the command device 62. If it is determined that the increase is allowed, the procedure proceeds to Step S02, and if not, the procedure proceeds to Step S08. In Step S02, it is determined whether the wind speed falls within a range from V₁ to V₂. If it is determined that the wind speed falls within the range, the procedure proceeds to Step S03, and if not, the procedure proceeds to Step S08. In Step S03, the target rotation speed adjusted value is determined, the target rotation speed is adjusted, and the procedure proceeds to Step S04. In Step S04, a blade pitch angle command is determined, and the procedure proceeds to Step S05. In Step S05, the generator torque base command value is determined, and the procedure proceeds to Step S06. In Step S06, it is determined whether the generation power to be estimated is equal to or more than the rated generation power. It is determined that the generation power is equal to or more than the rated generation power, the procedure proceeds to Step S07. It is determined that the generation power is less than the rated generation power, the generator torque base command value is set to the generator torque command value, and a series of operations are ended. In Step S07, the generator torque command value is set to be less that the generator torque base command value in order to limit the generator torque, and a series of operations are ended. In Step S08, the target rotation speed base value is set to the target rotation speed in order not to increase the generator rotation speed, and the procedure proceeds to Step S09. In Step S09, the blade pitch angle command value is determined, and the procedure proceeds to Step S10. In Step S10, the generator torque command value is determined, and a series of operations are ended.

As described above, according to the wind power generation system of this embodiment and the operation method thereof, even in a case where there is no large margin in the respective elements (for example, structures such as the tower besides the electric machine) such as electric machines including a generator and a power converter, it is possible to increase the generator rotation speed. Therefore, it is possible to improve a power generation efficiency of the wind power generation system. Further, the above-described control may be not performed all the time, but it may be performed by switching to other similar controls. In other words, it is possible to be configured to be selectively switched between a third operation mode (in other words, an operation mode depicted by the solid line of Fig. 4) in which the first operation mode and the second operation mode both are executed, and an operation mode (referred to as a fourth operation mode) depicted by the dotted line of Fig. 4 without performing the above-described control. These switching is effectively performed by taking a wind forecast and a remaining life into consideration.

Further, the invention is not limited to the above embodiments, and various modifications can be made. For example, the embodiments are described in a clearly understandable way for the invention, and thus the invention is not necessarily to provide all the configurations described above. In addition, some configurations of a certain embodiment may be replaced with the configurations of another embodiment, and the configuration of the other embodiment may also be added to the configuration of a certain embodiment. Furthermore, additions, omissions, and substitutions may be made on some configurations of each embodiment using other configurations.

## Claims

1. A wind power generation system (1), comprising:
a blade (2) which is able to change a pitch angle;
a rotor (4) which receives wind and rotates,
wherein rotational energy of the rotor (4) is used to generate power; and
a control device which controls a rotor rotation speed which is a rotation speed of the rotor (4),
wherein the control device keeps the rotor rotation speed to be a rated value in a case where the rotor rotation speed is equal to or more than a first wind speed which is a wind speed resulting in a rated generation power,
wherein, in a case where the rotor rotation speed is less than the first wind speed and equal to or more than a second wind speed which is a wind speed resulting in a rated rotor rotation speed, a first operation mode in which a rotor rotation speed target value, that is, a target value of the rotor rotation speed, is increased to a value larger than the rated rotor rotation speed according to an increase of the wind speed, and a second operation mode in which the rotor rotation speed target value is reduced from the value larger than the rated rotor rotation speed to the rated rotor rotation speed according to the increase of the wind speed are executable, and
wherein the first operation mode is executed in a wind speed range lower than the second operation mode.

2. The wind power generation system (1) according to claim 1,
wherein the control device keeps an inclining in the first operation mode, in which the rotor rotation speed is changed in a case where the rotor rotation speed is smaller than the second wind speed as the wind speed is increased.

3. The wind power generation system (1) according to claim 1,
wherein the control device controls the generation power to be equal to or lower than the rated generation power in the middle of executing the first operation mode or the second operation mode.

4. The wind power generation system (1) according to claim 3,
wherein the control device controls the generation power to be equal to or less than the rated generation power by adjusting a generator torque which is generated by the generator (6).

5. The wind power generation system (1) according to claim 1,
wherein, in a case where the rotor rotation speed is less than the first wind speed and equal to or more than the second wind speed,
a third operation mode in which the first operation mode and the second operation mode are executed, and
a fourth operation mode in which the rotor rotation speed is kept at a target value of the rated rotor rotation speed
are selectively executed.

6. The wind power generation system (1) according to claim 5,
wherein the selection is performed by the control device on the basis of a command from a device which directly issues the command to the control device, or a command from a device which issues the command from a remote place to the control device.

7. A method of operating a wind power generation system (1), comprising:
a blade (2) which is able to change a pitch angle; and
a rotor (4) which receives wind and rotates,
wherein rotational energy of the rotor (4) is used to generate power,
wherein the rotor rotation speed is kept to be a rated value in a case where the rotor rotation speed is equal to or more than a first wind speed which is a wind speed resulting in a rated generation power,
wherein, in a case where the rotor rotation speed is less than the first wind speed and equal to or more than a second wind speed which is a wind speed resulting in a rated rotor rotation speed, a first operation mode in which a rotor rotation speed target value, that is, a target value of the rotor rotation speed, is increased to a value larger than the rated rotor rotation speed according to an increase of the wind speed, and a second operation mode in which the rotor rotation speed target value is reduced from a value larger than the rated rotor rotation speed to the rated rotor rotation speed according to an increase of the wind speed are executable, and
wherein the first operation mode is executed in a wind speed range lower than the second operation mode.
